# EUROPÄISCHE PATENTANMELDUNG

(11) **EP 1 362 995 A1**
(43) Veröffentlichungstag der Anmeldung: **19.11.2003**
(21) Anmeldenummer: 03010154.7
(22) Anmeldetag: 06.05.2003
(51) Int. Cl.: F01N 3/027, B01D 46/24

(54) **Partikelfilter mit einer elektrischen Heizung sowie Herstellungsverfahren für einen solchen Partikelfilter**

(30) Priorität: 16.05.2002 DE 10223148
(71) Anmelder: E.G.O. ELEKTRO-GERÄTEBAU GmbH, D-75038 Oberderdingen (DE)
(72) Erfinder: Ose, Lutz, Dr., 75447 Sternenfels (DE); Seidler, Christian, 75015 Bretten (DE)
(74) Vertreter: Patentanwälte Ruff, Wilhelm, Beier, Dauster & Partner

(57) **Zusammenfassung**

Gemäß einem Ausführungsbeispiel der Erfindung kann ein Rußfilter (23) geschaffen werden, der eine Heizung (17) zur Verbrennung von angelagertem Ruß aufweist. Der Partikelfilter (23) weist dabei mehrere Filterflächen (12) auf. Dabei tragen die Filterflächen (12) Katalysatorschichten (21), die einen geringen Teil der Filterfläche bedecken. Die Katalysatorschichten (21) sind dazu ausgebildet, eine Oxidierung von Ruß bei einer niedrigeren Temperatur als der eigentlichen Zündtemperatur zu bewirken. Die Verbrennung wird von der Heizung (17) initiiert.

## Beschreibung

### Anwendungsgebiet und Stand der Technik

Die Erfindung betrifft einen Partikelfilter mit einer elektrischen Heizung zur Verbrennung von angelagerten Partikeln sowie ein entsprechendes Herstellungsverfahren für einen solchen Partikelfilter. Der Partikelfilter weist dabei mindestens eine Filterfläche oder ein Filterelement auf, an dem sich Partikel ablagern. Bevorzugt wird die Erfindung für einen Rußfilter eingesetzt, wie er beispielsweise bei Dieselkraftmaschinen eingesetzt wird.

Bei Partikelfiltern besteht allgemein das Problem, dass die Filterelemente mit den herausgefilterten Partikeln zusetzen. Besonders bei Dieselfiltern ist dieses Problem sehr gravierend. Ein zugesetzter Filter verliert zum einen seine Filterwirkung. Zum anderen wird dadurch die Abfuhr von Abgas behindert, was zu einem überhöhten Abgasstaudruck und einer Beeinträchtigung der Funktion der Dieselkraftmaschine führen kann.

Es ist vorgeschlagen worden, dass ein Partikelfilter mehrere Filterelemente aufweist, zwischen denen scheibenförmige, folienartige Heizelemente angeordnet sind. Mittels der Heizelemente kann in Intervallen oder kontinuierlich der Filter, insbesondere von Ruß, freigebrannt werden. Hierbei besteht jedoch das Problem, dass eine Temperatur von ca. 700°C erreicht werden muss für den Verbrennungsvorgang. Dies bedeutet zum einen eine hohe thermische Belastung des Filters. Zum anderen ist dabei der Verbrauch an elektrischer Energie beträchtlich.

### Aufgabe und Lösung

Der Erfindung liegt die Aufgabe zugrunde, einen eingangs genannten Filter zu schaffen, mit dem die Probleme des Standes der Technik vermieden werden können und bei dem insbesondere eine Verbrennung von angelagerten Partikeln bei geringerer Temperatur und geringerem Energieeinsatz möglich ist.

Diese Aufgabe wird gelöst durch einen Partikelfilter mit den Merkmalen des Anspruchs 1. Vorteilhafte sowie bevorzugte Ausgestaltungen der Erfindung sind Gegenstand der weiteren Ansprüche und werden im folgenden näher erläutert. Der Wortlaut sämtlicher Ansprüche wird durch ausdrückliche Bezugnahme zum Inhalt der Beschreibung gemacht.

Erfindungsgemäß weist ein Partikelfilter eine Filterfläche oder ein Filterelement auf, das eine katalytisch wirksame Schicht auf einem Teil seiner Fläche trägt. Diese Schicht ist zur Oxidierung bzw. Verbrennung von Partikeln geeignet. Bei den Partikeln handelt es sich besonders bevorzugt um Ruß oder allgemein Partikel, die bei der Verbrennung von Kraftstoff in Verbrennungskraftmaschinen anfallen.

Auf diese Weise ist es möglich, einerseits eine Verbrennung von auf dem Filterelement angelagertem Ruß bei niedrigeren Temperaturen zu erreichen, was durch die katalytische Wirkung hervorgerufen wird. Andererseits wird nur ein Teil der Fläche des Filterelements und somit der Filterwirkung verringert. Der Vorgang der Verbrennung von Ruß auf einem Filter mit Katalysatorunterstützung ist aus dem Stand der Technik bekannt und braucht hier nicht näher erläutert zu werden. Durch eine solche katalytisch wirksame Schicht ist eine Herabsetzung der Zündtemperatur von Ruß von über 700°C auf etwas über 500°C möglich, beispielsweise 520°C bis 540°C.

Es gibt mehrere Arten, wie die Schicht ausgebildet sein kann. Vorteilhaft ist sie eine Beschichtung, also direkt auf das Filterelement aufgetragen. Dabei kann sie besonders vorteilhaft dauerhaft haftend aufgetragen sein. Insbesondere wird erfindungsgemäß ein Teil der Oberfläche des Filterelements beschichtet. Die Beschichtung bedeckt dabei besonders vorteilhaft eine zusammenhängende Fläche.

Um ein vorteilhaftes Verhältnis zwischen Katalysatorwirkung sowie bestehender Filterwirkung zu erreichen, kann die Katalysatorbeschichtung bis zu 30% der Fläche des Filterelementes bedecken. Bevorzugt ist es ein geringerer Anteil, besonders bevorzugt ca. 15%.

Als Material für die katalytische Wirkung kann eine Vielzahl von Materialien zum Einsatz kommen. Vorteilhaft enthält die Schicht Platin oder Palladium, da diese eine sehr gute katalytische Wirkung aufweisen. Des weiteren ist es möglich, die Schicht mit einem Gemisch aus wenigstens einem dieser beiden Materialien herzustellen.

Für die Wirkung als Katalysator kommt es vor allem auf die Fläche bzw. eine Flächenwirkung an. So kann die Dicke der Beschichtung relativ gering gewählt werden, wodurch sowohl Gewicht als auch wertvolles Material gespart werden. Mögliche Beschichtungsdicken liegen hier im Mikrometerbereich zwischen 1µm und 50µm. Vorteilhaft sind es zwischen 2 und 8µm, beispielsweise 4µm.

Bei einer bevorzugten Ausgestaltung der Erfindung wird die Schicht in räumlicher Nähe zu der elektrischen Heizung angeordnet. So ist es möglich, durch die doppelte Wirkung der Beheizung sowie der Katalysatorunterstützung zumindest in einem Bereich ein Verbrennen von Ruß zu initiieren. Dieses kann sich dann nach Art eines flächigen Abbrennens auf die Bereiche des Filterelementes ausbreiten, die keine Katalysatorschicht aufweisen. Ist erst einmal durch das Verbrennen des Rußes ein exothermer Vorgang gestartet, so wird auch der in der Nähe befindliche benachbarte Ruß verbrannt. Besonders bevorzugt befindet sich eine katalytisch wirksame Schicht in dem Bereich des Filterelementes, der der Heizung am nächstgelegenen ist.

Die Form der Katalysatorschicht kann einer Form der Heizeinrichtung entsprechen oder ähneln. Bevorzugt ist die Heizeinrichtung linienförmig und die Ausdehnung oder Anordnung der Schicht orientiert sich an der Form der Heizeinrichtung. Besonders bevorzugt folgt sie einer Linienform teilweise oder ganz. Für eine verbesserte Flächenwirkung kann dabei die Schicht ein Stück breiter sein als die Heizeinrichtung.

Ein bevorzugter Partikelfilter kann mehrere Filterelemente aufweisen, wodurch die Gesamtfläche des Partikelfilters stark vergrößert wird. Dabei weist jedes Filterelement mindestens eine katalytisch wirksame Schicht auf.

Besonders vorteilhaft weisen die Filterelemente jeweils zwei, in bestimmten Fällen auch mehr Flächen auf. Dabei können sie beispielsweise scheibenförmig sein. Besonders vorteilhaft weist jede der Flächen eines Filterelementes eine eigene Katalysatorschicht auf. So kann jeweils für jede einzelne Fläche eines Filterelementes die Verbrennung von Ruß mit dem Katalysator unterstützt werden.

Des weiteren ist es möglich, einen Partikelfilter zu schaffen, der mehrere balgartig gefaltete Filterflächen aufweist. Der Filter kann dabei länglich und zylindrisch sein.

Des weiteren besteht die Erfindung in einem Verfahren zur Herstellung eines Partikelfilters mit den Merkmalen des Anspruches 11. Die katalytisch wirksame Schicht wird erfindungsgemäß als Dickschichtpaste mit einer entsprechenden Flächenform auf ein Filterelement aufgetragen. Nach dem Auftragen wird die Schicht eingebrannt.

Als Methode zum Auftragen der Dickschichtpaste auf eine Filterelementfläche wird einerseits ein Sprühverfahren, andererseits ein Siebdruckverfahren als vorteilhaft angesehen. Als Dickschichtpaste kommt vorteilhaft eine sogenannte Resinatpaste zum Einsatz. Es sind jedoch auch andere Dickschichtpasten verwendbar.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

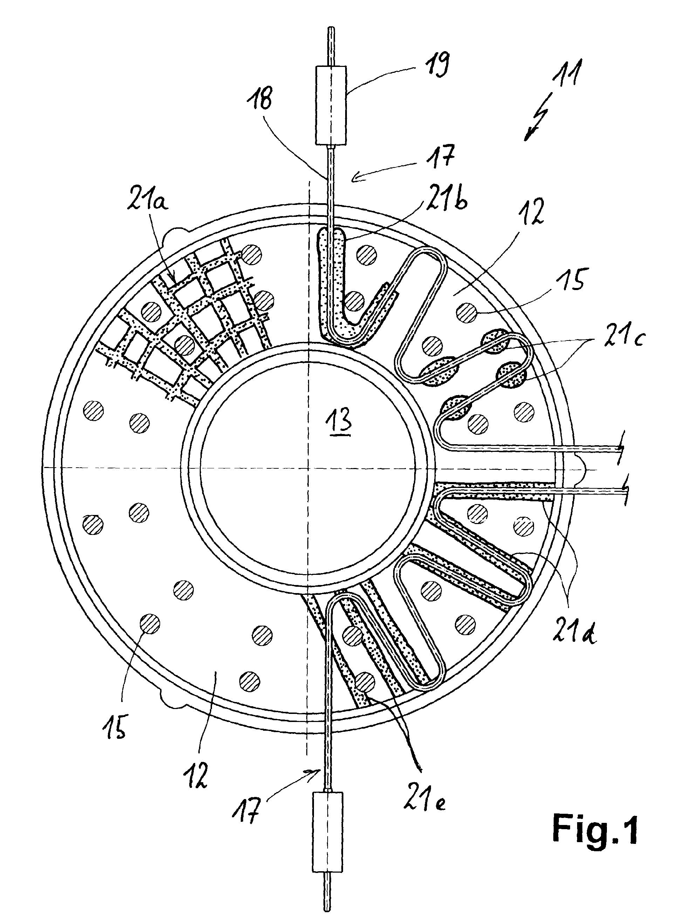

Ein Ausführungsbeispiel der Erfindung ist in der Zeichnung dargestellt und wird im folgenden näher erläutert. In der Zeichnung zeigt Fig. 1 eine Draufsicht auf ein scheibenförmiges Filterelement mit einer mäanderförmigen Heizung und verschiedenartig ausgebildeten flächigen Katalysatorschichten.

### Detaillierte Beschreibung des Ausführungsbeispiels

Fig. 1 zeigt im wesentlich schematisch ein Filterelement 11 in Form einer Scheibe. Genauer gesagt, ist das Filterelement eine Art Ringscheibe mit einer ringförmigen Filterfläche 12 und einem Innenraum 13. Des weiteren weist das Filterelement 11 Verbindungspunkte 15 auf, welche schraffiert dargestellt sind. Mittels dieser Verbindungspunkte 15 können zwei Filterelemente 11 zu einer Doppelscheibe verbunden werden. Alternativ und/oder zusätzlich können die Verbindungspunkte 15 als Abstandshalter zwischen zwei Filterelementen dienen. Derartige Filterelemente 11 können beispielsweise oben beschrieben nach Art von Doppelscheiben aufgebaut sein.

Über der Filterfläche 12 verläuft eine Heizung 17, wobei sie hier der Anschaulichkeit halber nur für den rechten Bereich des Filterelements 11 dargestellt ist. Normalerweise würde sie über die gesamte Filterfläche 12 hinweg verlaufen. Die Heizung 17 weist in diesem speziellen Fall eine mäanderförmige Heizschlange 18 auf mit Anschlusssteckern 19. Sie kann beispielsweise als dünner Rohrheizkörper gefertigt sein. Eine solche Heizung geht aus der DE 101 27 223 hervor. Für genauere Details wird hierzu ausdrücklich auf diese Anmeldung verwiesen.

Dabei ist in dem dargestellten Ausführungsbeispiel pro Viertelkreis eine Heizung 17 vorgesehen. Selbstverständlich ist es hier möglich, Heizungen auch in anderer Form oder auf andere Art auszubilden. So kann beispielsweise eine eher flächig ausgebildete Heizung, beispielsweise mit flächigen Heizleiterfolien, vorgesehen werden.

Die Filterfläche 12 trägt punktiert dargestellte Katalysatorschichten 21. Dargestellt sind mehrere verschiedene Ausbildungen solcher Katalysatorschichten.

Mit 21a ist eine Katalysatorschicht gekennzeichnet, die nach Art eines Gitters ausgebildet ist. Hierdurch kann eine relativ gute Überziehung der gesamten Filterfläche 12 mit einer solchen Katalysatorschicht 21a erfolgen.

Mit 21b ist eine Katalysatorschicht gekennzeichnet, die genau dem Verlauf der Heizschlange 18 folgt. Dabei ist sie ein Stück breiter als die Heizschlange 18 selber bzw. deren Projektion auf die Filterfläche 12. Dadurch soll veranschaulicht werden, dass eine Katalysatorschicht einer Heizung mit einer bestimmten vorgegebenen Form genau folgen kann.

Mit 21c sind Katalysatorschichten in Form von einzelnen Flecken oder fleckenartigen Bereichen gekennzeichnet. Auch diese sind, wie zu erkennen ist, dem Verlauf der Heizschlange 18 entsprechend angeordnet. Es ist jedoch genauso denkbar, sie unabhängig vom Verlauf einer Heizung mehr oder weniger gleichmäßig über die Filterfläche 12 zu verteilen.

Mit 21d sind Katalysatorschichten gekennzeichnet, die jeweils nach Art von Speichen quer über eine Filterfläche 12 in etwa in radialer Richtung verlaufen. Sie ähneln in ihrem Verlauf der Katalysatorschicht 21b. Sie können jedoch auch unabhängig von dem Verlauf einer Heizung die speichenartige Anordnung aufweisen.

Mit 21e wiederum sind Katalysatorschichten bezeichnet, die nach Art eines Linienrasters die Filterfläche 12 bedecken. Ihr Verlauf bzw. ihre Anordnung kann, wie zu erkennen ist, auch unabhängig von der Form einer Heizung gewählt werden.
Von den dargestellten Verteilungen für Katalysatorschichten 21 werden vor allem bei Verwendung von Heizschlangen 18 die Ausführungen 21b, 21c und 21d als vorteilhaft angesehen. Hier ist es nämlich, wie zuvor ausgeführt worden ist, möglich, diese sehr nahe an der Heizung 17 auszubilden und so für ein relativ schnelles Erreichen der Zündtemperatur des Rußes zu sorgen.

Selbstverständlich ist es möglich, die Bahnen der Katalysatorschichten 21 auch schmaler auszuführen. Dies ist jedoch einmal von den Aufbringungsverfahren abhängig. Zum anderen entspricht die Darstellung in Fig. 1 einer schematischen Darstellung und aus Gründen der besseren Darstellbarkeit sind die Bahnen hier eher breit gewählt.

Gemäß einem Ausführungsbeispiel der Erfindung kann also ein Rußfilter geschaffen werden, der eine Heizung zur Verbrennung von angelagertem Ruß aufweist. Der Partikelfilter weist dabei mehrere Filterflächen auf. Dabei tragen die Filterflächen Katalysatorschichten, die einen geringen Teil der Filterfläche bedecken. Die Katalysatorschichten sind dazu ausgebildet, eine Oxidierung von Ruß bei einer niedrigeren Temperatur als der eigentlichen Zündtemperatur zu bewirken. Die Verbrennung wird von der Heizung initiiert.

## Patentansprüche

1. Partikelfilter, vorzugsweise Rußfilter, mit einer Heizung (17) zur Verbrennung von Partikeln, die an dem Partikelfilter (23) angelagert sind, wobei der Partikelfilter mindestens eine Filterfläche (12) aufweist, **dadurch gekennzeichnet, dass** ein Teil der Filterfläche (12) eine katalytisch wirksame Schicht (21) aufweist, wobei die katalytisch wirksame Schicht (21) zur Oxidierung von Partikeln, wie Ruß oder dergleichen, bei niedrigeren Temperaturen geeignet ist.

2. Partikelfilter nach Anspruch 1, **dadurch gekennzeichnet, dass** der Teil der Filterfläche mit der katalytisch wirksamen Schicht (21) an einem Filterelement (11) angeordnet ist, wobei vorzugsweise das Filterelement (11) die Filterfläche (12) aufweist und insbesondere die Schicht (21) eine Beschichtung eines Teils der Oberfläche des Filterelements (11) ist.

3. Partikelfilter nach Anspruch 1 oder 2, **dadurch gekennzeichnet, dass** die Schicht (21) zwischen 1% und 30%, vorzugsweise ca. 15%, der Filterfläche (12) bedeckt.

4. Partikelfilter nach einem der vorhergehenden Ansprüche, **dadurch gekennzeichnet, dass** die Schicht (21) Platin oder Palladium aufweist, wobei sie vorzugsweise ein Gemisch mit einem dieser Materialien aufweist.

5. Partikelfilter nach einem der vorhergehenden Ansprüche, **dadurch gekennzeichnet, dass** die Dicke der Schicht (21) zwischen 1 µm und 50 µm beträgt, vorzugsweise 2 µm bis 8 µm, insbesondere ca. 4 µm.

6. Partikelfilter nach einem der vorhergehenden Ansprüche, **dadurch gekennzeichnet, dass** die Schicht (21) in räumlicher Nähe zu der Heizung (17) angeordnet ist, wobei sie vorzugsweise an einer der Heizung nächstgelegenen Stelle der Filterfläche (12) vorgesehen ist.

7. Partikelfilter nach einem der vorhergehenden Ansprüche, **gekennzeichnet durch** mehrere Filterelemente (11) mit mehreren Filterflächen (12), wobei jedes Filterelement (11) mindestens eine katalytisch wirksame Schicht (21) aufweist.

8. Partikelfilter nach Anspruch 7, **dadurch gekennzeichnet, dass** die Filterelemente (11) jeweils wenigstens zwei oder mehr Filterflächen (12) aufweisen, insbesondere scheibenförmig sind, wobei vorzugsweise jede der mehreren Filterflächen (12) eines Filterelements (11) eine eigene katalytisch wirksame Schicht (21) aufweist.

9. Partikelfilter nach einem der vorhergehenden Ansprüche, **dadurch gekennzeichnet, dass** die Heizung (17) eine elektrische Heizeinrichtung ist, vorzugsweise schmal oder in etwa linienförmig.

10. Verfahren zur Herstellung eines Partikelfilters nach einem der vorhergehenden Ansprüche, **dadurch gekennzeichnet, dass** die katalytisch wirksame Schicht (21) aus einem entsprechenden Ausgangsmaterial in Form einer Dickschichtpaste auf eine Filterfläche (12) aufgetragen wird, wobei sie bereichsweise aufgetragen wird, und anschließend eingebrannt wird.

11. Verfahren nach Anspruch 10, **dadurch gekennzeichnet, dass** das Auftragen der Dickschichtpaste auf eine Filterfläche (12) durch Sprühen oder Siebdruck erfolgt.

12. Verfahren nach Anspruch 10 oder 11, **dadurch gekennzeichnet, dass** die Dickschichtpaste eine Resinatpaste ist.
